# EUROPÄISCHE PATENTANMELDUNG

(11) **EP 2 799 370 A1**
(43) Veröffentlichungstag der Anmeldung: **05.11.2014**
(21) Anmeldenummer: 14164560.6
(22) Anmeldetag: 14.04.2014
(51) Int. Cl.: B65F 1/14, B02C 18/00, B02C 18/16

(54) **Behälter zum Zerkleinern und Aufnehmen von datenschutzrelevantem Material**

(30) Priorität: 30.04.2013 DE 202013004056 U
(71) Anmelder: MAMMUT Deutschland GmbH & Co. KG, 22926 Ahrensburg (DE)
(72) Erfinder: Christian GÜNTNER, 86923 Finning (DE)
(74) Vertreter: Klunker . Schmitt-Nilson . Hirsch

(57) **Zusammenfassung**

Ein erfindungsgemäßer Behälter zum Zerkleinern und Aufnehmen von datenschutzrelevantem Material umfasst einen oben offenen Aufnahmebehälter (4) zur Aufnahme des datenschutzrelevanten Materials; einen Behälterdeckel (6), der die Oberseite des Aufnahmebehälters (4) verschließt und der mithilfe eines ersten Schlosses (14) fest gegenüber dem Aufnahmebehälter (4) arretiert ist, wobei der Behälterdeckel (6) einen durchgriffsicheren Schredderaufnahmeschacht aufweist; wobei der Schredderaufnahmeschacht so ausgebildet ist, dass ein Schredder zum Zerkleinern von an dessen Oberseite eingeführten datenschutzrelevantem Material und zum Ausgeben des zerkleinerten Materials an dessen Unterseite, der in einen Heberahmen eingesetzt ist, zusammen mit dem Heberahmen in den durchgriffsicheren Schredderaufnahmeschacht einsetzbar und insbesondere mithilfe eines zweiten Schlosses (12) fest gegenüber dem Behälterdeckel (6) arretierbar ist.

## Beschreibung

Die Erfindung betrifft einen Behälter zum Zerkleinern und Aufnehmen von datenschutzrelevantem Material.

Behälter zum Zerkleinern und Aufnehmen von datenschutzrelevantem Material werden zum Beispiel in Büros eingesetzt, bei denen datenschutzrelevantes Material erzeugt wird.

Häufig haben solche Behälter einen Schredder bzw. Schredderkopf und einen Einwurfschlitz in ihrem Deckel, sodass datenschutzrelevantes Material entweder in schon durch den Schredder zerkleinerter Form in den Behälter gelangt oder durch den Einwurfschlitz in nicht zerkleinerter Originalform in den Behälter gelangt. Der Inhalt des Behälters wird durch spezielle Dienstleistungsunternehmen entsorgt, und es besteht dabei die Anforderung, dass ein unbefugter Zugriff auf den Behälterinhalt, der ja auch durch den Einwurfschlitz eingebrachtes unzerkleinertes, datenschutzrelevantes Material in Originalform beinhaltet, zu jedem Zeitpunkt verhindert ist.

Bestehende Behälter genügen diesen Anforderungen häufig nicht oder nur unvollständig, weil sie sowohl in dem Büro als auch während der Transportkette einen unbefugten Zugriff Dritter auf das datenschutzrelevante Material in dem Behälter erlauben, z.B. wenn der Behälter kurz unbeaufsichtigt ist.

Es ist daher eine Aufgabe der vorliegenden Erfindung, einen Behälter zum Zerkleinern und Aufnehmen von datenschutzrelevantem Material bereitzustellen, bei dem ein Zugriff auf das datenschutzrelevante Material in dem Behälter zu jedem Zeitpunkt zuverlässig verhindert ist. Zudem soll der Behälter zum Zerkleinern und Aufnehmen von datenschutzrelevantem Material kostengünstig herstellbar und gleichzeitig praktikabel sein.

Diese Aufgabe wird durch den Gegenstand des unabhängigen Patentanspruchs gelöst. Vorteilhafte Weiterbildungen ergeben sich aus den abhängigen Ansprüchen.

Ein erfindungsgemäßer Behälter zum Zerkleinern und Aufnehmen von datenschutzrelevantem Material umfasst einen oben offenen Aufnahmebehälter zur Aufnahme des datenschutzrelevanten Materials; einen Behälterdeckel, der die Oberseite des Aufnahmebehälters verschließt und der mithilfe eines ersten Schlosses fest gegenüber dem Aufnahmebehälter arretiert ist, wobei der Behälterdeckel einen durchgriffsicheren Schredderaufnahmeschacht aufweist.

Der Schredderaufnahmeschacht ist dabei so ausgebildet, dass ein Schredder bzw. Schredderkopf zum Zerkleinern von an dessen Oberseite eingeführten datenschutzrelevantem Material und zum Ausgeben des zerkleinerten Materials an dessen Unterseite, der in einen Heberahmen eingesetzt ist, zusammen mit dem Heberahmen in den durchgriffsicheren Schredderaufnahmeschacht einsetzbar und insbesondere mithilfe eines zweiten Schlosses fest gegenüber dem Behälterdeckel arretierbar ist.

Der Schredder zum Zerkleinern von an dessen Oberseite eingeführten datenschutzrelevantem Material und zum Ausgeben des zerkleinerten Materials an dessen Unterseite kann auch Teil des Behälters sein, er kann in einen Heberahmen eingesetzt sein, und der Schredder kann zusammen mit dem Heberahmen in den durchgriffsicheren Schredderaufnahmeschacht eingesetzt und insbesondere mithilfe eines zweiten Schlosses fest gegenüber dem Behälterdeckel arretiert sein.

Unter datenschutzrelevantem Material werden dabei erfindungsgemäß Papier, Pappe, Folien und Datenträger jeglicher Art, nämlich elektrische, optische und magnetische Speichermedien, insbesondere Speicherkarten, Mikrofilme, CDs, DVDs, Disketten und dergleichen verstanden.

Ein erfindungsgemäßer Behälter zum Zerkleinern und Aufnehmen von datenschutzrelevantem Material verhindert einen Zugriff auf das in den Behälter eingebrachte datenschutzrelevante Material zu jedem Zeitpunkt. Der Aufnahmebehälter ist seitlich und unten flächig verschlossen. Der die Oberseite des Aufnahmebehälters verschließende Deckel ist fest mit Hilfe eines Schlosses an dem Aufnahmebehälter arretiert. Idealerweise ist weder an dem Bestimmungsort des Behälters noch in der Transportkette der entsprechende Schlüssel zum Lösen des Arretierungsdeckels verfügbar.

Der Schredder ist zusammen mit dem Heberahmen in den durchgriffssicheren Schredderaufnahmeschacht eingesetzt und insbesondere mit Hilfe des zweiten Schlosses fest gegenüber dem Deckel arretiert ist. Der Schlüssel zum Lösen der Arretierung des zweiten Schlosses steht idealerweise nicht am Bestimmungsort des Behälters sondern nur den mit dem Austausch des Behälters beauftragten Personen bzw. Dienstleistungsunternehmen zur Verfügung.

Dadurch wird gewährleistet, dass zum einen am Bestimmungsort des Behälters der Schredder zusammen mit dem Heberahmen in der Position in dem durchgriffssicheren Aufnahmeschacht verbleibt und somit zum einen kein Entwenden des Schredders mit Heberahmen möglich ist und zum anderen durch den Deckel und durch den Schredder mit Heberahmen kein Zugriff auf das datenschutzrelevante Material möglich ist.

Die Mitarbeiter des mit der Entsorgung des datenschutzrelevanten Materials beauftragten Unternehmens verfügen idealerweise über den Schlüssel zum Lösen der Arretierung des zweiten Schlosses, und sie werden in der Regel so vorgehen, dass sie die Arretierung des zweiten Schlosses lösen, den Schredder zusammen mit dem Heberahmen aus dem durchgriffssicheren Schredderaufnahmeschacht des gefüllten Behälters herausnehmen und diesen in den durchgriffssicheren Schredderaufnahmeschacht eines leeren Austauschbehälters einsetzen und dann dort mit dem Schlüssel das zweite Schloss wieder arretieren und schließlich den gefüllten Behälter ohne Schredder und Heberahmen in die Transportkette bis zur Endentsorgung und gegebenenfalls Wiederverwertung des datenschutzrelevanten Materials in den Behälter geben.

Dieses Verfahren ist einfach, praktikabel und verhindert gleichzeitig sicher zu jedem Zeitpunkt, während sich der Behälter entweder an seinem Bestimmungsort oder in der Transportkette befindet, einen unbefugten Zugriff auf das datenschutzrelevante Material in dem Behälter.

Der durchgriffssichere Schredderaufnahmeschacht erlaubt zwar über einen Öffnungsbereich die Ausgabe von zerkleinertem Material durch den Schredder in den Behälter, gleichzeitig ist dieser Öffnungsbereich jedoch so ausgeführt, zum Beispiel durch Vorsehen eines Gitters, von Gitterstäben oder dergleichen, mit Öffnungen, die kleiner sind als eine Handbreite, dass, wenn der Schredder zusammen mit dem Heberahmen abgenommen ist, zum Beispiel während der Transportkette, ebenfalls kein unbefugter Zugriff auf das in dem Behälter befindliche datenschutzrelevante Material möglich ist.

Zudem wirkt solcher erfindungsgemäßer Deckel in optischer und technischer Hinsicht sehr hochwertig.

Als weiterer Vorteil ergibt sich, dass der erfindungsgemäße Behälter individuell mit einem Schredder bestückt werden kann, sodass das zerkleinerte datenschutzrelevante Material in einer Größe vorliegt, welches der Sicherheitsstufe des ausgewählten Schredders entspricht.

Der Kunde kann entscheiden, welches Material / Dokumente er vor Ort, also in seinen Räumlichkeuiten bereits vernichten will und welche er an einen externen Dienstleister übergeben will. (Institutionen wie Bundeswehr umnd Krankenhäuser haben die Vorgabe manche Dokumente nicht unvernichtet außer Haus geben zu dürfen - unabhängig von der Sicherheitstsufe). Bei der vorliegenden Erfindung kann der Kunde demnach entscheiden was er in-house vernichten will und anhand der Wahl des Shredderkopfes auch nach welcher Sicherheitstufe / Schnippselgröße er dies tun will.

Gemäß einer ersten Ausführungsform ist der Aufnahmebehälterbereich von tonnenförmiger Gestalt und weist einen einzigen, unabgeteilten Aufnahmebereich für das datenschutzrelevante Material auf. Dadurch werden Nachteile vermieden, die sich beim Vorsehen von mehreren Aufnahmebereichen ergeben, nämlich eine ungleichmäßige Befüllung und eine schlechte Entleerung von schmalen Schächten. Es wird vielmehr sichergestellt, dass stets vollgefüllte Aufnahmebehälter ausgetauscht werden, und die Entleerung einfach durchgeführt werden kann.

Gemäß einer weiteren Ausführungsform der Erfindung kann der Schredder so ausgebildet sein, dass er von oben eingeführtes datenschutzrelevantes Material so zerkleinert und an seiner Unterseite ausgibt, dass es eine Schnipselgröße gemäß Sicherheitsstufe 3, 4, 5, 6 oder 7 nach DIN 66399 hat, die zum Zeitpunkt der Anmeldung relevant ist. Die Sicherheitsstufe 5 entspricht dabei einer Schnipselgröße von etwa 0,2 x 1,0 cm, die Sicherheitsstufe 7 entspricht einer Schnipselgröße von weniger als einem Quadratmillimeter. Bei dem vorliegenden Behälter können somit Schredder eingesetzt werden, die individuelle und auch sehr hohe Sicherheitsstufen gewährleisten.

Gemäß einer weiteren Ausführungsform weist der Behälterdeckel einen Einwurfschlitz zum Einwerfen von unzerkleinertem, datenschutzrelevantem Material auf. Dies ist beim Bestimmungsort eines solchen Behälters oft gewünscht. Trotz der sich in der Praxis daraus ergebenen Konsequenz, dass in dem Aufnahmebehälter unzerkleinertes datenschutzrelevantes Material vorhanden ist, kann der erfindungsgemäße Behälter einen Zugriff darauf durch Unbefugte zuverlässig verhindern.

Daraus ergibt sich der weitere Vorteil, dass der Nutzer am Bestimmungsort des erfindungsgemäßen Behälters selbst entscheiden kann, welches datenschutzrelevante Material er bereits vor Ort, also in seinen Räumlichkeiten vernichten will und welches datenschutzrelevante Material er unvernichtet an einen externen Dienstleister übergeben will, der dann die Vernichtung durchführt. Einige Institutionen wie die Bundeswehr oder Krankenhäuser haben die Vorgabe, manche Dokumente nicht unvernichtet außer Haus geben zu dürfen, unabhängig von der Sicherheitsstufe.

Der Einwurfschlitz kann dabei praktischerweise über eine insbesondere an der Unterseite des Behälterdeckels angebrachte Schließplatte mit einer vorgespannten Federklappe verfügen, so dass der Einwurfschlitz im Nicht-Einwurfzustand verschlossen ist.

Der Aufnahmeschacht verfügt in einer weiteren Ausführungsform der Erfindung an seiner Unterseite über einen Öffnungsbereich, der an einer Position angeordnet ist, die im eingesetzten Zustand des Schredders mit Heberahmen der Position des Ausgabebereichs für das zerkleinerte Material an der Unterseite des Schredders entspricht. Dadurch kann das zerkleinerte Material zuverlässig in den Aufnahmebehälter gelangen.

Gemäß einer weiteren Ausführungsform der Erfindung ist der Öffnungsbereich des Aufnahmeschachts mit einem Gitter oder mit Stäben versehen, so dass die Öffnungen den Öffnungsbereichs kleiner als Handgröße sind, um einen manuellen Durchgriff zu verhindern. Dadurch wird das datenschutzrelevante Material in dem Aufnahmebehälter zuverlässig vor dem Zugriff unbefugter Dritter geschützt.

Gemäß einer weiteren Ausführungsform der Erfindung ist die Unterseite des durchgriffssicheren Aufnahmeschachts, einschließlich des Öffnungsbereichs, in einem Winkel zur Horizontalen angeordnet und erstreckt sich insbesondere, von vorne nach hinten gesehen, schräg nach unten. Ein solcher durchgriffssicherer Aufnahmeschacht ist somit an eine übliche, entsprechende Gestalt des Schredders angepasst.

Gemäß einer weiteren Ausführungsform der Erfindung sind die Seitenwände, die vordere Wand und die hintere Wand des Aufnahmeschachts durchgehend und ohne Öffnung ausgebildet, dies trägt ebenfalls dazu bei, dass unbefugten Dritten kein Zugriff auf das datenschutzrelevante Material in dem Aufnahmebehälter erlaubt wird, insbesondere während des Transports.

Gemäß einer besonders praktischen Ausführungsform, bei der Heberahmen und Schredder leicht ausgetauscht werden können, sind der Heberahmen und der Schredder schraubenlos miteinander verbunden und der Heberahmen umgreift den Schredder an der Oberseite mit wenigstens einer Kralle, um so eine im eingesetzten Zustand unlösbare Einheit zwischen Heberahmen und Schredder zu bilden.

Gemäß einer weiteren Ausführungsform ist der Heberahmen so ausgebildet, dass er den Schredder um seine Längs- und Querseiten umgibt. Somit ist der Schredder besonders sicher durch den Heberahmen eingefasst. Gemäß einer weiteren Ausführungsform stehen an der linken und rechten Seite des Heberahmens nach oben Griffe hervor, um ein Einsetzen und Herausnehmen der Einheit aus Schredder und Heberahmen zu erleichtern.

Gemäß einer weiteren Ausführungsform weist der Heberahmen eine Verriegelungsnase mit einer Öffnung auf, die sich durch eine Öffnung des Behälterdeckels erstreckt. Dabei weist das zweite Schloss einen Schließbolzen auf, der so ausgebildet ist, dass er sich im verriegelten Zustand des zweiten Schlosses durch die Öffnung der Verriegelungsnase des Heberahmens erstreckt. Dadurch kann die Einheit aus Heberahmen und Schredder auf einfache Weise, gleichzeitig aber sehr zuverlässig gegenüber dem Deckel arretiert werden.

Gemäß einer weiteren Ausführungsform ist weiterhin ein Transportsicherungsdeckel vorgesehen, um während des Transports noch sicherer einen Zugriff auf das datenschutzrelevante Material im Aufnahmebehälter durch unbefugte Dritte zu verhindern. Ein solcher Transportsicherungsdeckel kann so ausgebildet sein, dass er bei abgenommenem Schredder mit Heberahmen die Oberseite des durchgriffssicheren Aufnahmeschachts verschießt.

Gemäß einer weiteren Ausführungsform weist der Transportsicherungsdeckel eine Verriegelungsnase mit einer Öffnung auf, die sich in der Verriegelungsposition des Transportsicherungsdeckels durch eine Öffnung des Behälterdeckels erstreckt. Das zweite Schloss weist einen Schließbolzen auf, der so ausgebildet ist, dass er sich im verriegelten Zustand des zweiten Schlosses durch die Öffnung in der Verriegelungsnase des Transportsicherungsdeckels erstreckt. Auf diese Weise kann der Transportsicherungsdeckel einfach und doch zuverlässig gegenüber dem Behälterdeckel verriegelt werden. Das zweite Schloss sowie die Öffnung des Behälterdeckels können somit sowohl zum Verriegeln der Einheit aus Schredder und Heberahmen als auch zum Verriegeln des Transportsicherungsdeckels dienen.

Gemäß einer weiteren Ausführungsform verfügt der Transportsicherungsdeckel über zwei hintere Krallen, die in zwei entsprechende Schlitze des Behälterdeckels eingreifen können, um so den Transportsicherungsdeckel gegenüber dem Behälterdeckel festzulegen. Dies stellt eine besonders einfache und gleichzeitig zuverlässige Ausführungsform dar.

Die Erfindung ist nachfolgend anhand von Ausführungsbeispielen mit Bezug auf die beiliegenden Figuren näher erläutert:
Fig. 1 zeigt eine perspektivische Ansicht eines Behälters für datenschutzrelevantes Material mit Schredder, gemäß einem Ausführungsbeispiel, mit Behältertonne, mit verriegeltem Behälterdeckel und mit darin eingesetzter Einheit aus Schredder mit Heberahmen;
Fig. 2 zeigt anhand ihrer Teilfiguren Fig. 2(a) und Fig. 2(b) perspektivische Ansichten des Behälterdeckels mit durchgriffssicherem Aufnahmeschacht und der Einheit aus Schredder mit Heberahmen während des Einsetzens, gemäß einem Ausführungsbeispiel;
Fig. 3 zeigt anhand ihrer Teilfigur Fig. 3(a) eine Draufsicht auf den Behälterdeckel mit eingesetzter Einheit Schredder mit Heberahmen von oben und anhand ihrer Teilfigur Fig. 3(b) den Behälterdeckel mit eingesetzter Einheit Schredder mit Heberahmen von unten;
Fig. 4 zeigt eine schematische Perspektivansicht des Heberahmens; und
Fig. 5 zeigt anhand ihrer Teilfigur Fig. 5(a) eine schematische Perspektivansicht des Deckels mit zusätzlichem Transportsicherungsdeckel, gemäß einem weiteren Ausführungsbeispiel, schräg von oben, und anhand ihrer Teilfigur 5(b) eine schematische Ansicht des Deckels mit zusätzlichem Transportsicherungsdeckel von der Seite.

Der erfindungsgemäße Behälter 2 für datenschutzrelevantes Material mit Schredder 8 umfasst eine Behältertonne 4 mit im Wesentlichen rechteckigem Querschnitt, mit flächig und öffnungslos ausgebildetem Boden und Seitenwänden. Die Behältertonne 4 kann mittels an der Unterseite ihres hinteren Endes vorgesehenen Rädern und mittels einer an der Oberseite ihres hinteren Endes angebrachten Griffstange einfach transportiert werden.

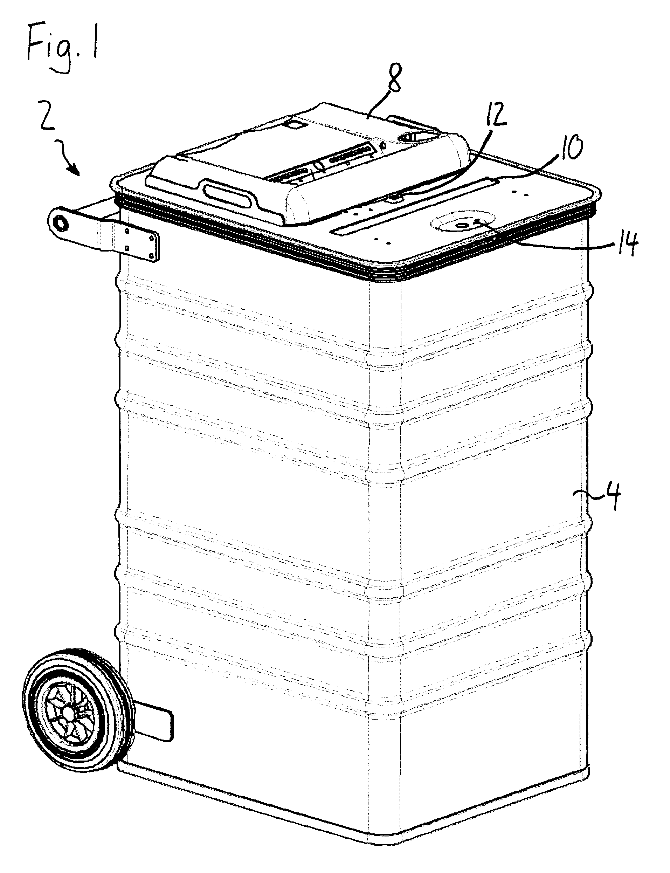

Die Behältertonne 4 ist nach oben hin offen, diese Öffnung ist jedoch durch einen verriegelten Behälterdeckel 6 verschlossen. Hierfür ist ein Schloss 14 vorgesehen, das den Deckel 6 fest und unlösbar mit der Behältertonne 4 verbindet. Der Schlüssel für dieses Schloss 14 ist üblicherweise nicht am Bestimmungsort des Behälters 2, sondern nur am Endentsorgungsort desselben verfügbar, sodass gewährleistet ist, dass der verriegelte Behälterdeckel 6 nicht am Bestimmungsort und auch nicht während der Transportkette abgenommen wird und Dritten ein unbefugten Zugriff auf das in der Behältertonne 4 befindliche datenschutzrelevante Material ermöglicht wird. Dieses Schloss 14 ist in dem Ausführungsbeispiel der Fig. 1 mittig nahe dem vorderen Ende des Behälterdeckels 6 angeordnet.

Dahinter befindet sich ein Einwurfschlitz 10, insbesondere mit einer federvorgespannten klappbaren Schließplatte, durch den datenschutzrelevantes Material unzerkleinert in die Behältertonne 4 gegeben werden kann. Dieser Einwurfschlitz 10 kann so schmal ausgebildet sein, dass ein Zugriff auf das datenschutzrelevante Material im Inneren der Behältertonne 4 verhindert wird, zum Beispiel kann die Schlitzbreite geringer als eine Handbreite sein. Des Weiteren kann dieser Einwurfschlitz 10 in optionaler Weise mit einem Schloss verriegelt werden.

Hinter dem Einwurfschlitz 10 ist eine Einheit 8 aus Schredder 32 und Heberahmen 26 in den Deckel 6, insbesondere in den nachfolgend noch genauer beschriebenen durchgriffssicheren Aufnahmeschacht 18 des Deckels 6 eingesetzt, und mittels eines Schlosses 12 wird die Einheit 8 aus Schredder 32 und Heberahmen 26 fest gegenüber dem Deckel 6 arretiert. Der Schlüssel zum Lösen dieser Arretierung, der dann das Herausnehmen der Einheit 8 aus Schredder 32 und Heberahmen 26 ermöglicht, steht üblicherweise den Mitarbeitern des mit der Entsorgung des datenschutzrelevanten Materials beauftragten Unternehmens zur Verfügung. Diese gehen in der Regel so vor, dass sie das Schloss 12 aufschließen, die Einheit 8 aus Schredder 32 und Heberahmen 26 aus dem gefüllten Behälter 2 entnehmen, diesen durch einen leeren Austauschbehälter ersetzen, dort die Einheit 8 aus Schredder 32 und Heberahmen 26 einsetzen und das Schloss 12 wieder verriegeln.

Der Schredder 32 verfügt über einen Einführschlitz, durch den zu zerkleinerndes datenschutzrelevantes Material in den Schredder gegeben wird und über einen in Fig. 1 rechts dargestellten Betätigungsschalter. Der Heberahmen 26 verfügt über zwei seitliche Heberahmengriffe 30.

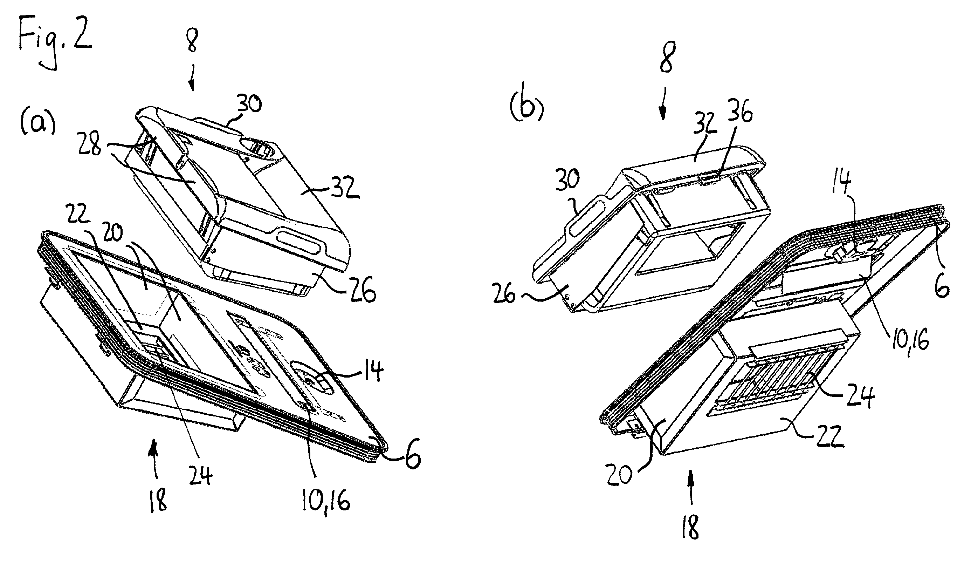

In den Fig. 2(a) und 2(b) ist der durchgriffssichere Aufnahmeschacht 18, in den die Einheit 8 aus Schredder 32 und Heberahmen 26 eingesetzt wird, gut erkennbar. Der durchgriffssichere Aufnahmeschacht 18 verfügt über im Wesentlichen senkrechte Seitenwände 20 und über eine Bodenplatte 22, die sich im vorliegenden Ausführungsbeispiel schräg nach hinten unten erstreckt. In der Bodenplatte 22 ist ein Öffnungsbereich 24 mit Gitterstäben angeordnet, und zwar an einer Position, die dem Auslassbereich für zerkleinertes Material des Schredders 32, der in Fig. 2 (b) gut zu erkennen ist, entspricht. Die Gitterstäbe verlaufen in diesem exemplarischen Ausführungsbeispiel von vorne nach hinten, und die Öffnungen dazwischen sind so klein, insbesondere schmaler als eine Handbreite, so dass, wenn zum Beispiel in der Transportkette die Einheit 8 aus Schredder 32 und Heberahmen 26 abgenommen ist, kein Zugriff Dritter durch den Öffnungsbereich 24 mit Gitterstäben auf das datenschutzrelevante Material in der Behältertonne 4 möglich ist. Insgesamt ist die Position der Seitenwände 20 und der Bodenplatte 22 mit Öffnungsbereich 24 der Kontur der Einheit 8 aus Schredder 32 und Heberahmen 26 angepasst, sodass diese Einheit 8 passgenau ohne wesentliches Spiel in den durchgriffssicheren Aufnahmeschacht 18 eingesetzt werden kann.

Den Schredder 32 umfasst einen Einführschlitz, eine nicht weiter erläuterte Zerkleinerungseinrichtung und einen unteren Auslassbereich, der wie in Fig. 2(b) gut zu erkennen ist, den vorderen Bereich der Unterseite des Schredders 32 einnimmt. Der obere Bereich des Schredders 32 ist gegenüber dem unteren Bereich sowohl seitlich als auch nach hinten und vorne verbreitert ausgeführt, so dass er mit diesem Bereich auf dem den durchgriffssicheren Aufnahmeschacht 18 umgebenden Abschnitt des Deckels 6, der einen Aufliegebereich bildet, aufliegt.

Der Heberahmen 26 umgibt den Schredder 32 seitlich, vorne und hinten. An den oberen Enden der Seitenbereiche des Heberahmens 26 sind seitliche Heberahmengriffe 30 angeordnet, um die Einheit 8 aus Schredder 32 und Heberahmen 26 leichter in den durchgriffssicheren Aufnahmeschacht 18 einzusetzen und aus diesem wieder herausheben zu können.

Der Heberahmen 26 ist beim vorliegenden Ausführungsbeispiel schraubenlos mit dem Schredder 32 verbunden. Der Schredder 32 wird im nicht eingesetztem Zustand mit dem Heberahmen 26 zu einer Einheit 8 vereinigt, indem dieser in den Heberahmen 26 eingeschwenkt und eingesetzt wird und indem sich ein Stück weit federnde Halterungsklauen 28 des Heberahmens 26 über die hintere Seite des Schredders 32 erstrecken, das hintere Ende der Oberseite des Schredders 32 umgreifen und somit eine Rastverbindung zwischen Schredder 32 und Heberahmen 26 bewirken.

An seinem vorderen Ende weist der Heberahmen 26 eine nach unten gerichtete Verriegelungsnase 36 mit Öffnung auf, die beim Einsetzen der Einheit 8 aus Schredder 32 und Heberahmen 26 in den durchgriffssicheren Aufnahmeschacht 18 durch eine entsprechende Öffnung in der Oberseite des Deckels 6 vor der vorderen Wand 20 des durchgriffssicheren Aufnahmeschachts 18 durchtritt. Durch das Schloss 12 kann dann ein Schließbolzen durch diese Öffnung der Verriegelungsnase 36 bewegt werden und so eine Verriegelung der Einheit 8 aus Schredder 32 und Heberahmen 26 gegenüber dem Deckel 6 bewirken. Im eingesetzten Zustand der Einheit 8 wird durch die Halterungsklauen 28 zuverlässig ein Entnehmen des Schredders 32 aus dem Heberahmen 26 und durch die Verriegelung des Schlosses 12 ein Entnehmen der Einheit 8 aus Schredder 32 und Heberahmen 26 aus dem Behälterdeckel 6 verhindert.

In dem vorderen Bereich des Behälterdeckels 6 sind noch der Einwurfschlitz 10 mit federvorgespannter klappbarer Schließplatte 16 und das Schloss 14 für die Deckelbefestigung gegenüber der Behältertonne 4 zu erkennen.

Des Weiteren ist gut zu erkennen, dass der Behälterdeckel 6 einen umlaufenden sich nach unten erstreckenden Flansch aufweist, der sich im auf die Behältertonne 4 ausgesetzten Zustand ein Stück weit nach unten über den oberen Rand der Behältertonne 4 erstreckt.

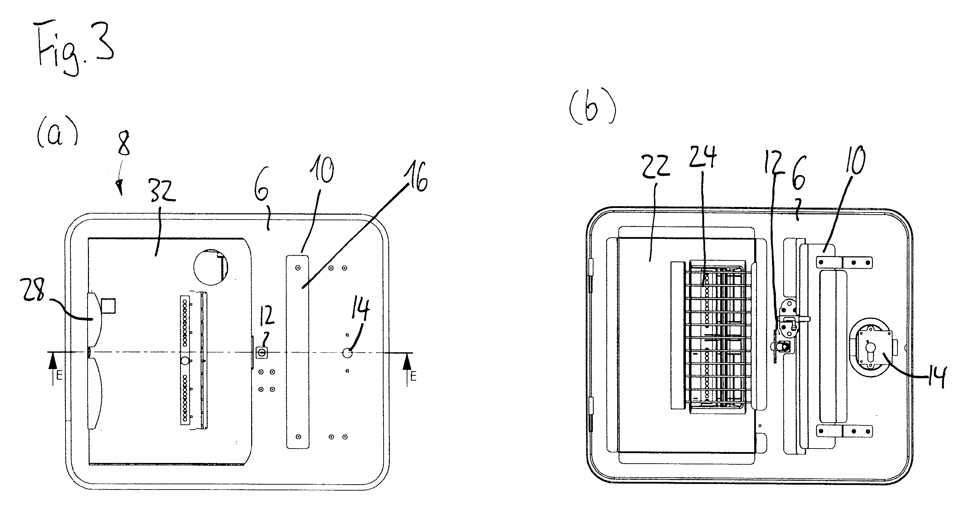

In Fig. 3(a) ist der Behälterdeckel 6 mit darin eingesetzter Einheit 8 aus Schredder 32 und Heberahmen 26 gut zu erkennen. Die Halterungsklauen 28 des Heberahmens 26, die das rückwärtige Ende der Oberseite des Schredders 32 umgreifen, sind ebenfalls gut zu erkennen.

Gemäß Fig. 3(b) ist gut zu sehen, wie der untere Auslassbereich für zerkleinertes Material des Schredders 32 oberhalb des Öffnungsbereichs 24 mit Gitterstäben der Bodenplatte 32 des durchgriffssicheren Aufnahmeschachts 18 zu liegen kommt.

Des Weiteren ist in Fig. 3(b) gut zu sehen, dass sich der Schließbolzen des Schlosses 12 durch die Öffnung der Verriegelungsnase 36 des Heberahmens 26 erstreckt und somit die Einheit 8 aus Schredder 32 und Heberahmen 26 fest gegenüber dem Deckel 6 verriegelt. Schließlich ist noch der optional vorgesehene Riegel zum Verschließen des Einwurfschlitzes 10 zu erkennen, und das Schloss 14 für die Deckelbefestigung ist ebenfalls gut zu sehen.

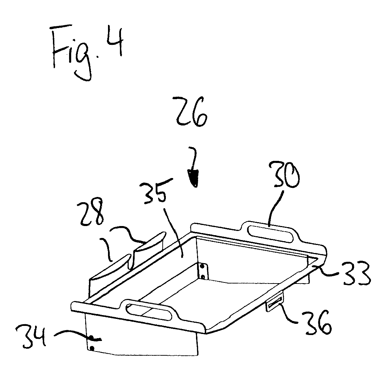

Gemäß Fig. 4 verfügt der Heberahmen 26 über eine obere rahmenförmige Auflagefläche 33, auf welcher der Schredder 32 mit der Unterseite seines flanschartig verbreiterten oberen Bereichs aufliegt. Mittig am Vorderende des Heberahmens 26 ist die Verriegelungsnase 36 mit waagrechter Öffnung gut zu erkennen, in die der Schließbolzen des Schlosses 12 einfahren kann. Die Seitenwandbereiche 34 und der Rückwandbereich 35 schließen jeweils aneinander an. Die Unterseiten der Seitenwandbereiche 34 sind von vorne nach hinten abgeschrägt, wobei die Schrägung der Schrägung der Bodenplatte 22 des durchgriffssicheren Aufnahmeschachts 18 des Deckels 6 entspricht. Auch die hinteren Halterungsklauen 38 und die seitlichen Heberahmengriffe 30 sind gut zu erkennen.

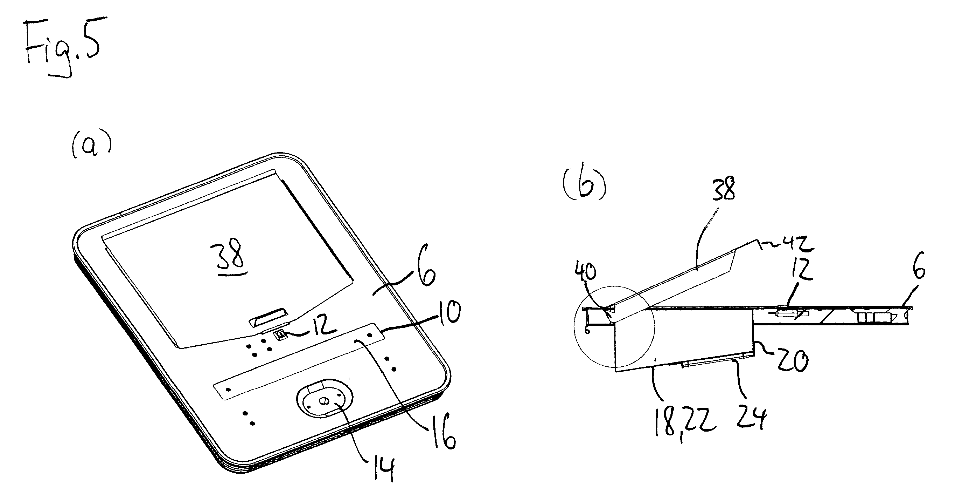

Gemäß Fig. 5 ist die Einheit 8 aus Schredder 32 und Heberahmen 26 aus dem durchgriffssicheren Aufnahmeschacht 18 entfernt. Um noch sicherer zu verhindern, dass bei abgenommener Einheit 8 aus Schredder 32 und Heberahmen 26 ein unbefugter Zugriff Dritter auf das datenschutzrelevante Material in der Behältertonne 4 erfolgen kann, ist ein zusätzlicher Transportsicherungsdeckel 38 vorgesehen, der die Oberseite des durchgriffssicheren Aufnahmeschachts 18 vollflächig abdeckt. Dieser Transportsicherungsdeckel 38 hat, wie in Fig. 5(b) gut zu erkennen, zwei längliche Seitenteile an der Unterseite, mit Krallen 40 an ihren Enden, die in entsprechende Öffnungsbereiche des Deckels 6 eingreifen und so den Transportsicherungsdeckel 38 gegenüber dem Deckel 6 haltern. Des Weiteren hat der Transportsicherungsdeckel 38 an seinem vorderen Ende eine sich nach unten erstreckende Verriegelungsnase 42 mit Öffnung, die der Verriegelungsnase mit Öffnung 36 des Heberahmens entspricht und die sich durch die im Deckel 6 vorgesehene Öffnung hindurch erstrecken kann, so dass ein Verriegelungsbolzen des Schlosses 12 durch diese Öffnung der Verriegelungsnase 42 durchtreten kann und so zusammen mit den Krallen 40 den Transportsicherungsdeckel 36 fest gegenüber dem Deckel 6 verriegelt.

### Bezugszeichenliste

- 2: Behälter für datenschutzrelevantes Material mit Schredder
- 4: Behältertonne
- 6: verriegelter Behälterdeckel
- 8: Einheit Schredder mit Heberahmen
- 10: Einwurfschlitz
- 12: Schloss für Einheit Schredder mit Heberahmen
- 14: Schloss für Deckelbefestigung
- 16: federnd vorgespannte, klappbare Schließplatte
- 18: durchgriffssicherer Aufnahmeschacht
- 20: Seitenwände
- 22: Bodenplatte
- 24: Öffnungsbereich mit Gitterstäben
- 26: Heberahmen
- 28: Halterungsklauen
- 30: seitliche Heberahmengriffe
- 32: Schredder
- 33: rahmenförmige Auflagefläche
- 34: Seitenwandbereiche
- 35: Rückwandbereich
- 36: Verriegelungsnase mit Öffnung
- 38: Transportsicherungsdeckel
- 40: Krallen
- 42: Verriegelungsnase mit Öffnung

## Patentansprüche

1. Behälter zum Zerkleinern und Aufnehmen von datenschutzrelevantem Material; aufweisend
einen oben offenen Aufnahmebehälter (4) zur Aufnahme des datenschutzrelevanten Materials;
einen Behälterdeckel (6), der die Oberseite des Aufnahmebehälters (4) verschließt und der mithilfe eines ersten Schlosses (14) fest gegenüber dem Aufnahmebehälter (4) arretiert ist, wobei der Behälterdeckel (6) einen durchgriffsicheren Schredderaufnahmeschacht (18) aufweist;
wobei der Schredderaufnahmeschacht (18) so ausgebildet ist, dass ein Schredder (32) zum Zerkleinern von an dessen Oberseite eingeführten datenschutzrelevantem Material und zum Ausgeben des zerkleinerten Materials an dessen Unterseite, der in einen Heberahmen (26) eingesetzt ist, zusammen mit dem Heberahmen (26) in den durchgriffsicheren Schredderaufnahmeschacht (18) einsetzbar und insbesondere mithilfe eines zweiten Schlosses (12) fest gegenüber dem Behälterdeckel (6) arretierbar ist.

2. Behälter nach Anspruch 1, wobei der Aufnahmebehälter (4) von tonnenförmiger Gestalt ist, und einen einzigen, unabgeteilten Aufnahmebereich für das datenschutzrelevante Material aufweist.

3. Behälter nach Anspruch 1 oder 2, wobei der Schredder (32) so ausgebildet ist, dass er von oben eingeführtes datenschutzrelevantes Material so zerkleinert und an seiner Unterseite ausgibt, dass es eine Schnitzelgröße gemäß Sicherheitsstufe 3, 4, 5, 6 oder 7 nach DIN 66399 hat.

4. Behälter nach einem der vorherigen Ansprüche, wobei der Behälterdeckel (6) einen Einwurfschlitz (10) zum Einwerfen von unzerkleinertem, datenschutzrelevanten Material aufweist.

5. Behälter nach dem vorherigen Anspruch, wobei der Einwurfschlitz (10) über eine insbesondere an der Unterseite des Behälterdeckels (6) angebrachte federvorgespannte Schließplatte (16) verfügt, sodass der Einwurfschlitz im Nicht-Einwurf-Zustand verschlossen ist.

6. Behälter nach einem der vorhergehenden Ansprüche, wobei der Aufnahmeschacht (18) an seiner Unterseite über einen Öffnungsbereich (24) verfügt, der an einer Position angeordnet ist, die im eingesetzten Zustand des Schredders (32) mit Heberahmen (26) der Position des Ausgabebereichs für das zerkleinerte Material an der Unterseite des Schredders (32) entspricht.

7. Behälter nach einem der vorhergehenden Ansprüche, wobei der Öffnungsbereich (24) des Aufnahmeschachts (18) mit einem Gitter oder mit Stäben versehen ist, sodass die Öffnungen des Öffnungsbereichs kleiner als Handgröße sind, um einen manuellen Durchgriff zu verhindern.

8. Behälter nach einem der vorhergehenden Ansprüche, wobei die Unterseite des durchgriffssicheren Aufnahmeschachts (18), einschließlich des Öffnungsbereichs, in einem Winkel zur Horizontalen angeordnet ist und sich insbesondere, von vorne nach hinten gesehen, schräg nach unten erstreckt.

9. Behälter nach einem der vorhergehenden Ansprüche, wobei die Seitenwände (20), die vordere Wand und die hintere Wand des Aufnahmeschachts (18) durchgehend und ohne Öffnungen ausgebildet sind.

10. Behälter nach einem der vorhergehenden Ansprüche, wobei der Heberahmen (26) und der Schredder (32) schraubenlos miteinander verbunden sind und der Heberahmen (26) den Schredder (32) an der Oberseite mit wenigstens einer Kralle (28) umgreift.

11. Behälter nach einem der vorhergehenden Ansprüche, wobei der Heberahmen (26) so ausgebildet ist, dass er den Schredder (32) um seine Längs- und Querseiten umgibt und/oder wobei an der linken und rechten Seite des Heberahmens (26) nach oben Griffe (30) hervorstehen.

12. Behälter nach einem der vorhergehenden Ansprüche, wobei der Heberahmen (26) eine Verriegelungsnase (36) mit einer Öffnung aufweist, die sich durch eine Öffnung des Behälterdeckels (6) erstreckt, und wobei das zweite Schloss (12) einen Schließbolzen aufweist, der so ausgebildet ist, das er sich im verriegelten Zustand des zweiten Schlosses (12) durch die Öffnung in der Verriegelungsnase (36) des Heberahmens (26) erstreckt.

13. Behälter nach einem der vorhergehenden Ansprüche, wobei weiterhin ein Transportsicherungsdeckel (38) vorgesehen ist, der so ausgebildet ist, dass er bei abgenommenem Schredder (32) mit Heberahmen (26) die Oberseite des durchgriffssicheren Aufnahmeschachts (18) verschließt.

14. Behälter nach Anspruch 13, wobei der Transportsicherungsdeckel (38) eine Verriegelungsnase (42) mit einer Öffnung aufweist, die sich in der Verriegelungsposition des Transportsicherungsdeckels (38) durch eine Öffnung des Behälterdeckels (6) erstreckt, und wobei das zweite Schloss (12) einen Schließbolzen aufweist, der so ausgebildet ist, das er sich im verriegelten Zustand des zweiten Schlosses (12) durch die Öffnung in der Verriegelungsnase (42) des Transportsicherungsdeckels (38) erstreckt.

15. Behälter nach dem vorhergehenden Anspruch, wobei der Transportsicherungsdeckel (38) über zwei hintere Krallen (40) verfügt, die in zwei entsprechende Schlitze des Behälterdeckels (6) eingreifen können, um den Transportsicherungsdeckel (38) gegenüber dem Behälterdeckel (6) festzulegen.
